# EUROPÄISCHE PATENTANMELDUNG

(11) **EP 1 106 290 A2**
(43) Veröffentlichungstag der Anmeldung: **13.06.2001**
(21) Anmeldenummer: 01102935.2
(22) Anmeldetag: 19.07.1999
(51) Int. Cl.: B23F 19/00

(54) **Verfahren und Vorrichtung zum Erzeugen von Hinterlegungen an Zahnflanken von innen- oder aussenverzahnten Werkrädern**

(30) Priorität: 20.07.1998 DE 19832487; 12.11.1998 DE 19852201
(62) Teilanmeldung aus: 99936565.3
(71) Anmelder: WERA WERK HERMANN WERNER GmbH & Co. KG, D-42349 Wuppertal (DE)
(72) Erfinder: Heym, Hans Udo, 42327 Wuppertal (DE)
(74) Vertreter: Grundmann, Dirk, Dr.

(57) **Zusammenfassung**

Die Erfindung betrifft ein Verfahren zum Erzeugen von Hinterlegungen (9) oder dergleichen an Zahnflanken (10) von innen- oder außenverzahnten Werkrädern (3) durch spanende Bearbeitung mittels eines Schneidkantenwerkzeuges (8, 21), welches um eine zur Werkradachse (4) parallele Werkzeugachse (7) dreht, mit einer Schneidkantenform, die der Hinterlegungsform entspricht. Erfindungsgemäß wird vorgeschlagen, daß durch Änderung von Phasenlage und Achsabstand von Werkzeugachse (7) zur Werkstückachse (4) während der Zahnflankenbearbeitung die Schneidkante (16, 18) sich innerhalb einer insbesondere evolventenförmigen Hüllkurve bewegt, welche die Hinterlegungs-Querschnittsform (20, 20', 20") definiert.

## Beschreibung

Die Erfindung betrifft ein Verfahren und eine Vorrichtung zum Erzeugen von Hinterlegungen oder dergleichen an Zahnflanken von innen- oder außenverzahnten Werkrädern durch spanende Bearbeitung mittels eines Schneidkantenwerkzeuges, welches um eine zur Werkradachse parallele Werkzeugachse dreht, mit einer Schneidkantenform, die der Hinterlegungsform entspricht.

Ein Verfahren und eine Vorrichtung der in Rede stehenden Art sind bekannt aus der DE 42 00 418 C1, wobei das Schneidkantenwerkzeug als drehantreibbares Einzahnwerkzeug ausgebildet ist. Dessen Schneidkante bewegt sich relativ zur Werkstückverzahnung für die Bearbeitung einer Innenverzahnung auf einer Hypozykloide und für die Bearbeitung an einer Außenverzahnung auf einer Epizykloide. Dabei erfolgt der Schneideneingriff in die Verzahnung jeweils im Spitzenbereich der Zykloide stoßend. Die Form der mit diesem Verfahren bzw. mit der bekannten Vorrichtung erzielten Hinterlegung ist dann eine Zykloide. Gewünscht ist oft aber eine andere Querschnittskontur. Beispielsweise soll die Flanken der Hinterlegung auch eine Evolvente sein.

Der Erfindung liegt daher die Aufgabe zugrunde, ein gattungsgemäßes Verfahren und eine gattungsgemäße Vorrichtung anzugeben, bei welcher die Flankenkontur der Hinterlegung in erheblichen Maße frei wählbar ist.

Gelöst wird die Aufgabe durch die in den Ansprüchen angegebene Erfindung. Die Unteransprüche stellen vorteilhafte Weiterbildungen dar.

Die Erfindung sieht vor, daß der Abstand von Werkstückachse und Werkzeugachse während der spanenden Bearbeitung durch eine elektronische Steuerung geringfügig verlagert werden kann. Gleichzeitig damit ist eine Beeinflussung der Phasenlage von Werkzeugachse und Werkstückachse vorgesehen. Zufolge dieser Beeinflussungsmöglichkeit kann der auf einer Zykloide verlaufende Flugkreis jeder Schneidkante so während der Bearbeitung verlagert werden, daß die der Schnittkantenbewegung folgende Hüllkurve eine Evolvente oder nahezu eine Evolvente ist und dabei die entsprechend geformte Hinterlegung ausfräst. Die Zahnflanke kann von einer Vielzahl von Schneidkanten gebildet sein. Dabei kann jeweils nur eine radialäußerste Schneidkante zum Schneideingriff kommen. Das Werkstück und das Werkzeug werden bevorzugt von miteinander synchronisierten elektrischen Einzelantrieben angetrieben.

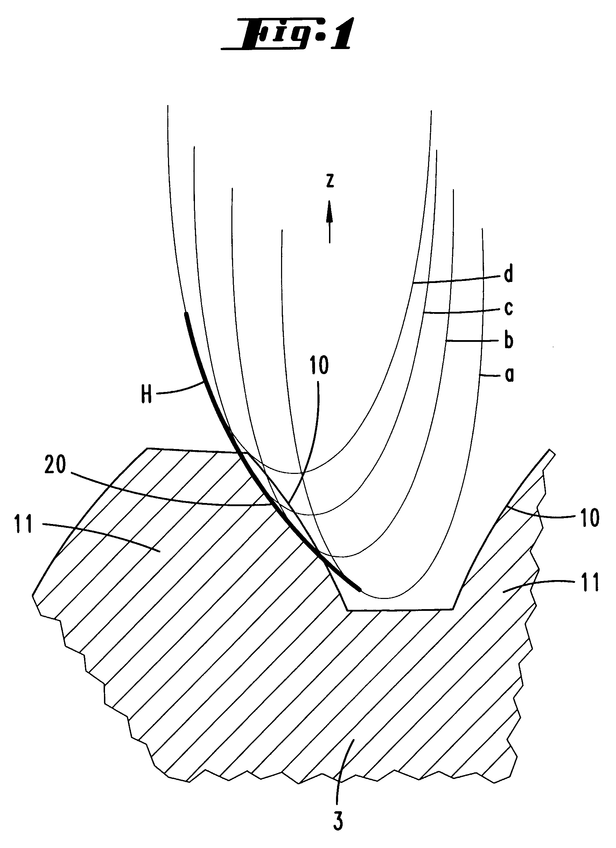

Die Erfindung wird anhand eines Ausführungsbeispieles beschrieben. Die Figur 1 zeigt in stark vergrößerte Darstellung mehrere hintereinander in die Zahnlücke eines Werkstückes eintauchende Schnitte, die sich auf Zykloiden-Ästen bewegen, wobei die Zykloiden-Äste zufolge einer Variation von Achsabstand und Phasenlage auf einer Einhüllenden H liegen. Das Werkzeug dient dazu, Hinterlegungen an Zahnflanken der Zähne eines insbesondere innenverzahnten Werkrades zu erzeugen. In Richtung der Zahnkopffläche gesehen, ist jede Hinterlegung als stumpfwinkelige Einbuchtung gestaltet. Die Erzeugung der Hinterlegungen erfolgt mittels eines Zahnkantenwerkzeuges, welches zufolge Drehung und Synchronisation mit der Drehung des Werkstückes in einem festgelegten Drehzahlverhältnis Zykloiden-Flugkreise beschreibt. Die Zykloiden-Äste a, b, c, d der hintereinander erfolgenden Schnitte, beaufschlagen zeitlich hintereinander die Zahnflanke 10 des Zahnes 11 des Werkrades 3. Sie durchlaufen dabei die Einhüllende H. Die Querschnittsform 20 der Hinterlegung, die ein Abbilden der Einhüllenden H ist, wird durch die Variation der Phasenlage zwischen Drehbewegung von Werkrad und Drehbewegung von Werkstück und der Variation des Achsabstandes der parallel zueinander liegenden Werkstückachse und Werkradachse bestimmt.

Auf die vorgenannte Weise lassen sich unterschiedlich beschaffene Hinterlegungs-Querschnittsformen erzielen, und zwar in Abhängigkeit davon, wie die Einhüllende den Zahn anschneidet. Im Ausführungsbeispiel ist der entsprechende Verlauf der Hinterlegungs-Querschnittsform 20 dadurch erzielt, daß überlagert zu einer Phasenlagenvariation die Werkzeugachse in Pfeilrichtung z verlagert worden ist.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum Erzeugen von Hinterlegungen (9) oder dergleichen an Zahnflanken (10) von innen- oder außenverzahnten Werkrädern (3) durch spanende Bearbeitung mittels eines Schneidkantenwerkzeuges (8, 21), welches um eine zur Werkradachse (4) parallele Werkzeugachse (7) dreht, mit einer Schneidkantenform, die der Hinterlegungsform entspricht, dadurch gekennzeichnet, daß durch Änderung von Phasenlage und Achsabstand von Werkzeugachse (7) zur Werkstückachse (4) während der Zahnflankenbearbeitung die Schneidkante (16, 18) sich innerhalb einer insbesondere evolventenförmigen Hüllkurve bewegt, welche die Hinterlegungs-Querschnittsform (20, 20', 20'') definiert.

2. Vorrichtung zum Erzeugen von Hinterlegungen (9) oder dergleichen an Zahnflanken (10) von innen- oder außenverzahnten Werkrädern (3) durch spanende Bearbeitung mittels eines Schneidkantenwerkzeuges (8, 21), welches um eine zur Werkradachse (4) parallele Werkzeugachse (7) dreht, mit einer Schneidkantenform, die der Hinterlegungsform entspricht, dadurch gekennzeichnet, daß der Vorschub eine überlagerte Achsabstands- und Phasenlagenvariation ist.

3. Verfahren oder Vorrichtung nach einem oder mehreren der vorhergehenden Ansprüche oder insbesondere danach, dadurch gekennzeichnet, daß die Schneidkanten (16, 18, 22) an die Zahnflanke (13) des Werkzeuges (8, 21) sitzen.

4. Verfahren oder Vorrichtung nach einem oder mehreren der vorhergehenden Ansprüche oder insbesondere danach, dadurch gekennzeichnet, daß die Zahnflanke (13) eine Vielzahl von Schneidkanten (16 bzw. 18) ausbildet.

5. Verfahren oder Vorrichtung nach einem oder mehreren der vorhergehenden Ansprüche oder insbesondere danach, dadurch gekennzeichnet, daß jeweils nur eine radial äußerste Schneidkante zum Schneideingriff kommt.

6. Verfahren oder Vorrichtung nach einem oder mehreren der vorhergehenden Ansprüche oder insbesondere danach, dadurch gekennzeichnet, daß das Werkstück (3) und Werkzeug (8, 21) jeweils von elektrischen Einzelantrieben (5, 6) angetrieben werden.
